# EUROPEAN PATENT SPECIFICATION

(11) **EP 1 557 979 B1**
(45) Date of publication and mention of the grant of the patent: **31.01.2007**
(21) Application number: 04001231.2
(22) Date of filing: 21.01.2004
(51) Int. Cl.: H04L 12/24, H04Q 7/34, H04Q 7/30, H04M 3/22

(54) **Method and device for determining the speech latency across a network element of a communication network**
Verfahren und Vorrichtung zur Feststellung der Sprachlatenzzeit durch ein Netzwerkelement eines Kommunikationsnetzwerkes
Méthode et dispositif pour déterminer la latence de la parole à travers un élément de réseau d'un réseau de transmission

(43) Date of publication of application: 27.07.2005
(73) Proprietor: Tektronix International Sales GmbH, 8212 Neuhausen (CH)
(72) Inventor: Galetto, Stefano, 45026 Lendinara (RO) (IT); Cappon, Roberto, 30030 Santa Maria di Sala (Venice) (IT)
(74) Representative: Schurack, Eduard F.

(56) References cited:
- US-B1- 6 545 979
- LAKANIEMI A ET AL: "Subjective voip speech quality evaluation based on network measurements" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 June 2001 (2001-06-11), pages 748-752, XP010553102 ISBN: 0-7803-7097-1
- TALLAK S ET AL: "Time delay estimation for objective quality evaluation of low bit-rate coded speech with noisy channel conditions" SIGNALS, SYSTEMS AND COMPUTERS, 1993. 1993 CONFERENCE RECORD OF THE TWENTY-SEVENTH ASILOMAR CONFERENCE ON PACIFIC GROVE, CA, USA 1-3 NOV. 1993, LOS ALAMITOS, CA, USA,IEEE COMPUT. SOC, 1 November 1993 (1993-11-01), pages 1216-1219, XP010096209 ISBN: 0-8186-4120-7

## Description

The present invention relates to a method and a device for determining the speech latency across a network element of a communication network which is able to transmit a speech signal encoded in digital data packets either in a circuit switched or in a packet-oriented way wherein at the input of the network element is arranged a first interface and at the output of the network element a second interface.

In the following the present invention for the sake of a better understanding and without restricting its significance is represented by an example of an UMTS network. As obvious to the expert in the field, it is also applicable to networks according to a different standard.

For instance in the 3G-scenario "packet based" networks permit an optimised use of band resources, adopting Adaptive Multi Rate (AMR) codecs for speech compression and Discontinuous Transmission (DTX) techniques to meet customer satisfaction as a trade-off between Quality of Service (QoS) and costs. The QoS provided by such telecommunication networks depends upon a number of factors among which the major roles are played by the overall end-to-end speech latency and the distortion introduced using low bit rate codecs.

The speech latency across a network element to be distinguished from a round-trip delay occurring between different network devices in a network. Such a round-trip delay can be measured as it is described in the article by A. Lakaniemi et al. "Subjective VoIP speech quality evaluation based on network measurements", ICC 2001 IEEE International Conference on Communications. Conference record. Helsinky, Finland, June 11-14, 2001, IEEE International Conference on Communications, New York, NY: IEEE, US, VOL. 1 of 10, 11 June 2001, pages 748 to 752, ISBN 0-7803-7097-1.

The speech latency is the time delay between the speech signal at the input of a network device and the same signal at its output, e.g. across the two sides of a media gateway in the UMTS architecture. This delay depends on propagation time of the signals through the network device, on buffering mechanism used by codecs (typically more than one buffer of 20 ms has to be collected before starting the encoding algorithm) and on processing time spent by transcoding equipment for encoding/decoding and forward packets.

Moreover, the speech latency over UMTS interfaces is effected by typical phenomena occurring in "packet based" networks such as jitter and packet loss.

Jitter is the packet delay variation due to a non-constant time arrival of packets. The effect of this phenomenon can be attenuated using the so-called de-jitter buffers that, however, introduce further end-to-end delay. Adaptive de-jitter buffers can also be employed with variable length modified as a function of the monitored jitter during speech pauses. Nevertheless, they introduce a variable speech latency that may impact the overall quality perceived by customers.

Also packet loss and packet duplication influence QoS in terms of distortion and speech latency, especially in presence of burst packet loss when consecutive packets are not received at the network end points. To reduce the effect of this impairment commonly ad-hoc packet loss concealment techniques are used, which reduce the distortion perceived by listeners and allow the correct reconstruction of the speech signal envelope in the time domain. The disadvantage of these techniques is the requirement of a precise packet loss evaluation, i.e. check of frame number field of consecutive packets, that cannot be guaranteed in the early stage of design of 3G network elements.

Up to now, the technical problem of the assessment of speech latency in a telecommunication has been solved by using an "end-to-end" approach. Manufacturers and operators set up calls between two handsets saving digital speech signals at the two termination points, i.e. talker mouth and listener ear, and compare them using end-to-end off-line algorithms. However, even if this prior art approach allows the evaluation of the overall speech latency between two terminating points it does not provide an accurate measure of the delay introduced by each or a new digital equipment present in the network. At the same time, the use of low bit rate codecs, such as the AMR ones, no longer allows for predicting theoretically and with high precision the part of the overall delay due to encoding algorithms. This particularly applies to codecs with no linear speech-dependent complexity.

With regard to the requirement to better tune digital equipment the task of the present invention therefore consists in further developing the method according to the preamble in such a way that evaluation of speech latency across each relevant network element is facilitated. Further the task exists to provide a corresponding device.

These tasks are solved on the one hand by a method with the features of claim 1, on the other hand by a device having the features of claim 13.

The present invention, referring to an UMTS network as an example, is based on the understanding that instead of analysing the reconstructed language signal at the two terminating handsets to analyse the signals which are present at the UMTS interfaces which are positioned at the input and the output of the network element in question. Instead of the end-to-end approach the present invention starts from a device-to-device approach which directly processes speech packets on the mentioned UMTS interfaces thereby minimising unpredictable jitter or packet loss effects and providing accurate measures across the digital equipment under test. Laboratory tests in a simulated environment with tunable packet loss percentage have provided the following results:
- 99% of measures are within 1 ms of the actual speech latency value in all test conditions, i.e. male and female speech samples following ITU-T P.800 standard, all AMR codecs, VAD (voice activity detection) enabled and disabled;
- the invention provides accurate figures in variable noisy environments subjected to packet loss uniformly (percentage up to 10 %) and burst (length up to 100 ms) distributed;
- the invention is able to properly reconstruct the speech envelope in the time domain even if noise compression, e.g. DTX (discontinuous transmission) and VAD, is enabled.

The invention allows an inventor to determine how a certain device, e.g. more recent version of a given device, affects the overall performance. With regard to an optimisation of the relationship between QoS and speech latency the present invention represents a possibility to tune a buffer, i.e. to determine an optimum middle size of the storage.

In a preferred embodiment the method comprises further step e) which consists in performing a signal analysis, especially a protocol analysis, before step b) for determining whether speech transmission is taking place at the moment. This measure ensures that the method according to the invention be not inadvertently applied to unsuitable signals, e.g. in case of speech data not yet present.

A further preferred embodiment is characterised by the following step f) which is performed prior to step a) and consists in synchronising the data packets recorded at both interfaces. Within this step preferably the following step is carried out: Determining the timestamp difference and transforming the timestamp difference into a number of samples wherein the timestamp differences are preferably calculated as follows: First, the first speech packet in the output direction of the network element (step f1)) is recorded, then the succeeding speech packet in the input direction of the network (step f2)) element is recorded. After this step the succeeding speech packet in the output direction (step f3)) of the network element is recorded and then the timestamp difference between the packets of the third and the second step (step f3) and step f2)) is determined (step f4)).

In an advantageous embodiment the following step follows: Resynchronising input and output signals (step f5)) in case of persistent and unrecoverable network impairments and restarting the procedure from step f1).

Preferably, the calculated timestamp difference is considered in step c). Herein it is particularly preferred that in step c) the output signal of the network element is delayed by the timestamp difference determined in step f4). Then a synchronisation of the two packet flows at the input and the output of the network element under test is induced in a reliable way. In particular hereby the situation can be considered where the input and output are set up at different times.

In an advantageous embodiment step b) involves decoding the speech packets and reconstructing the speech signal envelope in the time domain.

Furthermore, preferably before step c) the following step is performed: h) separating the speech signals and noise signals and proceeding with step c) only when the presence of a speech signal has been detected. This further development serves to enhance guarantee that the algorithm according to the invention is only carried out when a speech signal is present thus preventing useless results.

Preferably, between step c) and step d) the following step may be performed: i) comparing the peak computed for the cross-correlation with a predeterminable threshold and performing step d) only when the calculated peak is larger than the predeterminable threshold. Herein it is taken into account that the peak with male and female speakers may be of different pitch and for the case that the peak remains below the predetermined threshold value the method according to the invention should be repeated.

Finally, step j) is preferably conducted in which after step d) the determined value for a speech latency is compared with predeterminable values and the determined value for the speech latency is only issued when it is within a predeterminable range of the predeterminable values. The predeterminable values are preferably the neighbouring determined values, i.e. the speech latency values determined for the preceding and the subsequent speech samples.

The advantageous embodiments and their embodiments in connection with the method according to the invention of course also apply to the device according to the invention and vice versa.

Further advantageous embodiments derive from the subclaims. In the following one embodiment of the present invention is described in more detail with reference to the enclosed drawings. They show:
- Fig. 1: a diagram of a device according to the invention arranged in a communication network for establishing the speech latency of a certain network element; and
- Fig. 2: the diagram of Fig. 1 containing a detailed representation of the method steps performed in the device according to the invention.

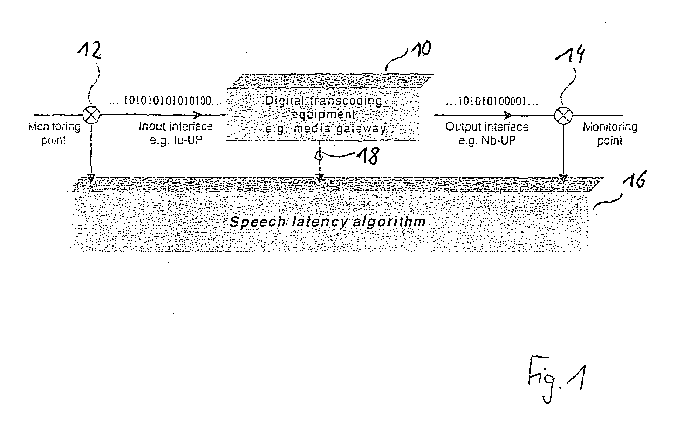

In Fig. 1 the reference numeral 10 designates the network element the speech latency of which is to be determined. The network element may comprise one or several network elements and concerns, e.g. in an UMTS network which serves as an example for representing the following invention for the sake of a better understanding, in particular digital transcoding equipment, e.g. a media gateway. This equipment generally referred to as network element 10 is arranged in a communication network (only suggested in Fig. 1) and which is designed to transmit a speech signal encoded in digital data either in a circuit switched or a packet-oriented way. Packet-based herein means that several users share one channel whilst circuit switched based means that a channel is reserved for one user. In a transcoding equipment a change of the transmission rate may be performed, also the format may be changed. At the input of the network element 10 an input interface 12, e.g. a lu-UP, is provided whilst at the output of the network element 10 an output interface 14, e.g. an Nb-UP, may be provided. In these two interfaces 12, 14 the data are present in digital form. These interfaces 12, 14 serve as monitoring points and deliver the input signals of a device 16 according to the invention for determining the speech latency across the network element 10. The arrow 18 represents an optional interface which on the control plane may provide info via call start/stop, which, however, as set out in the following, is not necessary.

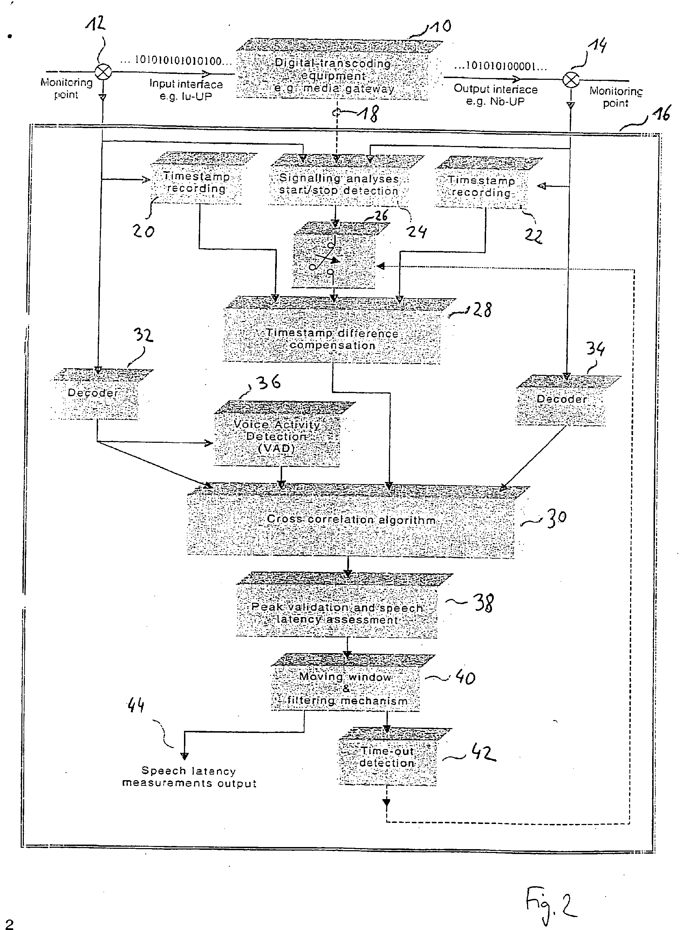

Input and output packets are processed in the same way except for the Voice Activity Detection (VAD). They are recorded with their timestamp, decoded and cross-correlated each other obtaining a first "raw" measure. A statistical approach and a mobile window filtering is then used for providing more accurate results. For more details, reference is made to Fig. 2.

In Fig. 2 the individual functional blocks of the device 16 according to the invention are represented in detail. Depending on the interface 12, 14 involved, signalling information, e.g. call start and stop, can be provided directly from the network element 10, see arrow 18, following ITU-TH.248 Megaco protocol, usually, however, e.g. lu-UP and Nb-UP, the algorithm retrieves all needed information directly from the User Plan layer of each interface 12, 14.

Blocks 20, 22 serve the timestamp recording, on the input side, block 20, of the network element 10 and then on the output side, block 22, of the network element 10.

In blocks 20, 22 each packet is recorded with its arrival time (timestamp), with a precision better than 100 µs. In fact, a lower timestamp precision may affect algorithm resolution (which is intended to be 1 ms), since AMR codecs deal with speech signals sampled at 8 kHz, i.e. one sample every 125 µs. In block 24 a signal analysis and a start/stop detection takes place. Preferably it is namely intended to trigger the measurement start/stop to the call begin/end point. As already mentioned in the above, depending on the interfaces 12, 14 involved the information is provided by the Megaco protocol or by the User Plan layer. This block 24 also drives switch block 26 that enables the timestamp difference compensation, as will be described in more detail with reference to block 28, only one time when a call is in progress and the timestamp of the first speech packets in input and output of the network element 10 are available. The purpose of the timestamp difference compensation block 28 is to synchronise two packet flows in input and output of a network element 10 computing a timestamp difference, in order to care of the situation in which the input and output channel are set up not at the same time. The block works as follows: First, it records the first speech package (A) in the output direction, then the succeeding speech package (B) in the input direction and finally the succeeding speech packet (C) in the output direction. The timestamp difference is computed between packets C and B, converted in number of samples (each sample 125 µs) and sent to the cross-correlation algorithm block 30 which will be referred to in more detail further down in the description.

A decoder 32, 34 is allocated to the input and the output, respectively, serving for decoding the compressed speech packets and reconstructing the speech signal envelope in the time domain. Optionally, before the decoder blocks 32, 34 a dejittering buffer and some known packet loss concealment (PLC) techniques can be inserted for simulating a sort of "end-to-end" scenario where the only element present in the network is the network element 10. However, by default only the decoder blocks 32, 34 are used in the algorithm.

Since the cross-correlation algorithm requires stationary signals to produce reliable results, the input speech signal is processed with a VAD (Voice Activity Detection) algorithm in block 36 that separates speech signals and voice pauses. Only when the VAD algorithm recognises the presence of a voice signal, the cross-correlation starts. The already mentioned block 30 performs the cross-correlation between input and output speech samples using the "overlap-safe" method with a buffer size equal to 2048. When the call starts and the timestamp difference is estimated, the cross-correlation algorithm delays the output signal with the computed difference filling the buffer with zero values. This permits to compute the actual delay between speech samples, even if packets have not been sampled synchronously or the two channels have not been set up at the same time. Each correlation is 1s long and starts when all the eight (2048/256) input subblocks of 32ms have been classified as voice by the Voice Activity Detection block 36. Since in the preferred embodiment each packet contains 160 speech samples (each 20 ms) and correlation is performed on 2048 samples an adaption circular buffer also has to be used. In block 38 a peak validation and speech latency assessment is provided. The aim of this block 38 is to validate the cross-correlation peak and provide a "raw" speech latency measure. For each cross-correlation (1s long) the peak is computed and compared with the cross-correlation standard deviation following this rule: if the peak is greater than the product from threshold and standard deviation, the peak is validated and a "raw" measure is computed, otherwise the peak is rejected.

In the preferred embodiment the threshold is equal to 7 and has been tuned using ad-hoc databases containing male and female speech samples ITU-T P.800 standard, all are in AMR codecs, VAD enabled and disabled. In block 40 moving window and filtering mechanisms are provided. Each "raw" measure is hereby inserted in a moving window "buffer" containing the preferred five elementary measures. In the buffer the measure to be processed is saved together with the two previous and the two consecutive ones and it is validated when there is at least one value equal to it in the "moving window" (default values are used for the first two and the last two measures). Such mechanism is used to filter spurious measures and provides the assessment of the speech latency with high accuracy.

The timeout detection block 42 takes into account the fact that in some cases the technique for evaluating the packet loss generated along the network, i.e. because a network element involved in the past does not work correctly, may need an on-fly adjustment to ensure the speech signal is correctly reconstructed. To face this event the timeout detection block 42 has been inserted which when the timeout expires drives the switch 26 that enables another timestamp difference computation, resynchronises input and output signals and resets the cross-correlation during the ongoing call. Via output 44 the block 40 in the case of a positive comparison provides the result of the speech latency measurement.

## Claims

1. Method for determining the speech latency across a network element (10) of a communication network, which is able to transmit a speech signal encoded in digital data packets either in a circuit switched or in a packet-oriented way, wherein at the input of the network element is arranged a first interface (12) and at the output of the network element a second interface (14), the method comprising the following steps:
a) at both interfaces (12, 14): for a sample of data packets allocating a timestamp to each data packet and recording each data packet together with its timestamp;
b) at both interfaces (12, 14): decoding the recorded data packets and generating a speech signal envelope in the time domain;
c) performing a cross-correlation between both speech signal envelopes for determining correlating areas of the first and second speech signal envelope;
d) from the associated timestamps of correlating areas of the first and second timestamp: determining a value for the speech latency between the first and second interface.

2. Method according to claim 1,
comprising the following further step:
e) before step b) performing a signal analysis, especially a protocol analysis, for determining whether a speech transmission is taking place at the moment.

3. Method according to claim 1 or 2,
comprising the following further step:
f) before step a) synchronising the data packets to be recorded at both interfaces.

4. Method according to claim 3
wherein step f) comprises the following step:
determining the timestamp difference and transforming the timestamp difference into a number of samples, wherein the timestamp difference is preferably calculated as follows:
f1) recording the first speech packet in the output direction of the network element;
f2) recording the succeeding speech packet in the input direction of the network element;
f3) recording the succeeding speech packet in the output direction of the network element;
f4) determining the timestamp difference between the packets of step f3) and step f2).

5. Method according to claim 4
comprising the following further step:
f5) resynchronizing input and output signals in case of persistent and unrecoverable network impairments and restarting the procedure from step f1).

6. Method according to claim 4 or 5
comprising the following further step:
g) considering the timestamp difference in step c).

7. Method according to claim 6,
wherein in step c) the output signal of the network element is delayed by the timestamp difference determined in step f4).

8. Method according to any of the preceding claims,
wherein step b) involves decoding the speech packets and reconstructing the speech signal envelope in the time domain.

9. Method according to any of the preceding claims,
wherein before step c) the following step is performed:
h) separating speech signals and noise signals and proceeding with step c) only when the presence of a speech signal has been detected.

10. Method according to any of the preceding claims,
wherein between step c) and step d) the following step is performed:
i) comparing the peak computed for the cross correlation with a predeterminable threshold and performing step d) only when the calculated peak is larger than the predeterminable threshold.

11. Method according to any of the preceding claims,
furthermore comprising the following step:
j) after step d) comparing the determined value for the speech latency with predeterminable values and issue of the determined value for the speech latency only when it is within the predeterminable range of the predeterminable values.

12. Method according the claim 11,
wherein the preterminable values are neighbouring determined values.

13. Device for determining the speech latency across a network element (10) of a communication network, which is designed to transmit a speech signal encoded in digital data packets either in a circuit switched or in a packet-oriented way, wherein at the input of the network element (10) is arranged a first interface (12) and at the output of the network element (10) a second interface (14), the device comprising the following:
- means for allocating a timestamp to the data packets of a sample of data packets at the two interfaces (12, 14);
- means (20, 22) for recording the allocated timestamps together with the corresponding data packets;
- means (32, 34) for decoding the recorded data packets at both interfaces for generating a respective speech signal envelope in the time domain;
- means (30) for performing a cross-correlation between both speech signal envelopes for determining correlating areas of the first and second speech signal envelope; and
- means (38, 40) for determining a value for the speech latency between the first and second interface (12, 14) from the associated timestamps of correlating areas of the first and second envelope.

## Patentansprüche

1. Verfahren zum Bestimmen der Sprachwartezeit über einem Netzwerkelement (10) eines Kommunikationsnetzwerks, das ein in digitalen Datenpaketen codiertes Sprachsignal entweder in einer leitungsvermittelten oder einer paketorientierten Weise übertragen kann, wobei am Eingang des Netzwerkelements eine erste Schnittstelle (12) und am Ausgang des Netzwerkelements eine zweite Schnittstelle (14) angeordnet ist, wobei das Verfahren die folgenden Schritte umfasst:
a) an beiden Schnittstellen (12, 14): für einen Abtastwert von Datenpaketen Zuordnen eines Zeitstempels zu jedem Datenpaket und Aufzeichnen von jedem Datenpaket zusammen mit seinem Zeitstempel;
b) an beiden Schnittstellen (12, 14): Decodieren der aufgezeichneten Datenpakete und Erzeugen einer Sprachsignalhüllkurve im Zeitbereich;
c) Durchführen einer Kreuzkorrelation zwischen beiden Sprachsignalhüllkurven zum Bestimmen von Korrelationsbereichen der ersten und der zweiten Sprachsignalhüllkurve;
d) aus den zugehörigen Zeitstempeln der Korrelationsbereiche des ersten und des zweiten Zeitstempels: Bestimmen eines Werts für die Sprachwartezeit zwischen der ersten und der zweiten Schnittstelle.

2. Verfahren nach Anspruch 1,
welches den folgenden weiteren Schritt umfasst:
e) vor Schritt b) Durchführen einer Signalanalyse, insbesondere einer Protokollanalyse, zum Bestimmen, ob eine Sprachübertragung in dem Moment stattfindet.

3. Verfahren nach Anspruch 1 oder 2,
welches den folgenden weiteren Schritt umfasst:
f) vor Schritt a) Synchronisieren der an beiden Schnittstellen aufzuzeichnenden Datenpakete.

4. Verfahren nach Anspruch 3,
wobei Schritt f) den folgenden Schritt umfasst:
Bestimmen der Zeitstempeldifferenz und Transformieren der Zeitstempeldifferenz in eine Anzahl von Abtastwerten, wobei die Zeitstempeldifferenz vorzugsweise folgendermaßen berechnet wird:
f1) Aufzeichnen des ersten Sprachpakets in der Ausgangsrichtung des Netzwerkelements;
f2) Aufzeichnen des nachfolgenden Sprachpakets in der Eingangsrichtung des Netzwerkelements;
f3) Aufzeichnen des nachfolgenden Sprachpakets in der Ausgangsrichtung des Netzwerkelements;
f4) Bestimmen der Zeitstempeldifferenz zwischen den Paketen von Schritt f3) und Schritt f2).

5. Verfahren nach Anspruch 4,
welches den folgenden weiteren Schritt umfasst:
f5) erneutes Synchronisieren von Eingangs- und Ausgangssignalen im Fall von dauerhaften und nicht wiederherstellbaren Netzwerkbeeinträchtigungen und erneutes Starten der Prozedur von Schritt f1).

6. Verfahren nach Anspruch 4 oder 5,
welches den folgenden weiteren Schritt umfasst:
g) Betrachten der Zeitstempeldifferenz in Schritt c).

7. Verfahren nach Anspruch 6,
wobei in Schritt c) das Ausgangssignal des Netzwerkelements um die in Schritt f4) bestimmte Zeitstempeldifferenz verzögert wird.

8. Verfahren nach einem der vorangehenden Ansprüche,
wobei Schritt b) das Decodieren der Sprachpakete und Rekonstruieren der Sprachsignalhüllkurve im Zeitbereich beinhaltet.

9. Verfahren nach einem der vorangehenden Ansprüche,
wobei vor Schritt c) der folgende Schritt durchgeführt wird:
h) Trennen von Sprachsignalen und Rauschsignalen und Fortfahren mit Schritt c) nur dann, wenn die Anwesenheit eines Sprachsignals erfasst wurde.

10. Verfahren nach einem der vorangehenden Ansprüche,
wobei zwischen Schritt c) und Schritt d) der folgende Schritt durchgeführt wird:
i) Vergleichen der für die Kreuzkorrelation berechneten Spitze mit einer vorbestimmbaren Schwelle und Durchführen von Schritt d) nur dann, wenn die berechnete Spitze größer ist als die vorbestimmbare Schwelle.

11. Verfahren nach einem der vorangehenden Ansprüche,
welches ferner den folgenden Schritt umfasst:
j) nach Schritt d) Vergleichen des bestimmten Werts für die Sprachwartezeit mit vorbestimmbaren Werten und Ausgeben des bestimmten Werts für die Sprachwartezeit nur dann, wenn er innerhalb des vorbestimmbaren Bereichs der vorbestimmbaren Werte liegt.

12. Verfahren nach Anspruch 11,
wobei die vorbestimmbaren Werte benachbarte bestimmte Werte sind.

13. Vorrichtung zum Bestimmen der Sprachwartezeit über einem Netzwerkelement (10) eines Kommunikationsnetzwerks, das dazu ausgelegt ist, ein in digitalen Datenpaketen codiertes Sprachsignal entweder in einer leitungsvermittelten oder in einer paketorientierten Weise zu übertragen, wobei am Eingang des Netzwerkelements (10) eine erste Schnittstelle (12) und am Ausgang des Netzwerkelements (10) eine zweite Schnittstelle (14) angeordnet ist, wobei die Vorrichtung folgendes umfasst:
- eine Einrichtung zum Zuordnen eines Zeitstempels zu den Datenpaketen eines Abtastwerts von Datenpaketen an den zwei Schnittstellen (12, 14);
- eine Einrichtung (20, 22) zum Aufzeichnen der zugeordneten Zeitstempel zusammen mit den entsprechenden Datenpaketen;
- eine Einrichtung (32, 34) zum Decodieren der aufgezeichneten Datenpakete an beiden Schnittstellen zum Erzeugen einer jeweiligen Sprachsignalhüllkurve im Zeitbereich;
- eine Einrichtung (30) zum Durchführen einer Kreuzkorrelation zwischen beiden Sprachsignalhüllkurven zum Bestimmen von Korrelationsbereichen der ersten und der zweiten Sprachsignalhüllkurve; und
- eine Einrichtung (38, 40) zum Bestimmen eines Werts für die Sprachwartezeit zwischen der ersten und der zweiten Schnittstelle (12, 14) aus den zugehörigen Zeitstempeln der Korrelationsbereiche der ersten und der zweiten Hüllkurve.

## Revendications

1. Procédé et dispositif destinés à la détermination de la latence de la parole à travers un élément de réseau (10) d'un réseau de communication apte à transmettre un signal vocal crypté dans des paquets de données numériques d'une manière soit à commutation de circuits soit à commutation par paquets, dans lesquels à l'entrée de l'élément de réseau, une première interface (12) est prévue, et à la sortie de l'élément de réseau, une seconde interface (14) est prévue, le procédé comportant les étapes suivantes:
a) aux deux interfaces (12, 14): attribution d'un horodateur, pour un échantillon de paquets de données, à chacun des paquets de données et enregistrement de chaque paquet de données ensemble avec son horodateur;
b) aux deux interfaces (12, 14): décryptage des paquets de données enregistrés et génération d'une enveloppe des signaux vocaux dans la plage de temporisation;
c) réalisation d'une corrélation croisée entre les deux enveloppes de signaux vocaux pour déterminer les zones en corrélation des première et seconde enveloppes de signaux vocaux;
d) sur les horodateurs attribués des zones en corrélation des premier et second horodateurs: détermination d'une valeur relative à la latence de la parole entre les première et seconde interfaces.

2. Procédé selon la revendication 1,
comportant l'étape suivante supplémentaire:
e) préalablement à l'étape b), mise en oeuvre d'une analyse de signal, en particulier une analyse de protocole, afin de déterminer si une transmission de la parole est en cours d'être réalisée.

3. Procédé selon la revendication 1 ou 2,
comportant l'étape suivante supplémentaire:
f) préalablement à l'étape a), synchronisation des paquets de données prévus d'être enregistrés aux deux interfaces.

4. Procédé selon la revendication 3,
dans lequel l'étape f) comporte l'étape suivante:
détermination de la différence d'horodateur et transformation de la différence d'horodateur en un nombre d'échantillons, dans lequel la différence d'horodateur est de préférence calculée tel que suit:
f1) enregistrement du premier paquet vocal en direction de la sortie de l'élément de réseau;
f2) enregistrement du paquet vocal consécutif en direction de l'entrée de l'élément de réseau;
f3) enregistrement du paquet vocal consécutif en direction de la sortie de l'élément de réseau;
f4) détermination de la différence d'horodateur entre les paquets des étapes f3) et f2).

5. Procédé selon la revendication 4,
comportant l'étape suivante supplémentaire:
f5) resynchronisation des signaux d'entrée et de sortie en cas d'insuffisances de réseau persistantes et non récupérables et recommencement de la procédure à partir de l'étape f1).

6. Procédé selon la revendication 4 ou 5,
comportant l'étape suivante supplémentaire:
g) prise en compte de la différence d'horodateur de l'étape c).

7. Procédé selon la revendication 6,
dans lequel à l'étape c), le signal de sortie de l'élément de réseau est retardé par la différence d'horodateur déterminée à l'étape f4).

8. Procédé selon l'une des revendications précédentes,
dans lequel l'étape b) inclut le décryptage des paquets vocaux et la restitution de l'enveloppe de des signaux vocaux dans la plage de temporisation.

9. Procédé selon l'une des revendications précédentes,
dans lequel, préalablement à l'étape c), l'étape suivante est mise en oeuvre:
h) séparation des signaux vocaux et sonores et continuation par l'étape c) seulement si la présence d'un signal vocal a été détectée.

10. Procédé selon l'une des revendications précédentes,
dans lequel, entre l'étape c) et l'étape d), l'étape suivante est mise en oeuvre:
i) comparation de la crête calculée pour la corrélation croisée avec une valeur de consigne prédéterminable et mise en oeuvre de l'étape d) uniquement lorsque la crête calculée est supérieure à la valeur de consigne prédéterminable.

11. Procédé selon l'une des revendications précédentes,
comprenant par ailleurs l'étape suivante:
j) au bout de l'étape d) de comparation de la valeur déterminée pour la latence de la parole avec des valeurs prédéterminables et émission de la valeur déterminée pour la latence de parole uniquement si elle est à l'intérieur de la gamme prédéterminable des valeurs prédéterminables.

12. Procédé selon la revendication 11,
dans lequel les valeurs prédéterminables s'approchent des valeurs déterminées.

13. Dispositif de détermination de la latence de la parole à travers un élément de réseau (10) d'un réseau de communication apte à transmettre un signal vocal crypté dans des paquets de données numériques d'une manière soit à commutation de circuits soit à commutation par paquets, dans lequel à l'entrée de l'élément de réseau, une première interface (12) et la sortie de l'élément de réseau, une seconde interface (14) est prévue, le dispositif comprenant les éléments suivants:
- des moyens d'attribution d'un horodateur aux paquets de données d'un échantillon de paquets de données aux deux interfaces (12, 14);
- des moyens d'enregistrement (20, 22) des horodateurs attribués, ensemble avec les paquets de données correspondants;
- des moyens (32, 34) de décodage des paquets de données enregistrés aux deux interfaces pour générer une enveloppe de signaux vocaux correspondante dans la plage de temporisation;
- des moyens (30) de réalisation d'une corrélation croisée entre les deux enveloppes des signaux vocaux pour déterminer des zones de corrélation des première et seconde enveloppes des signaux vocaux; et
- des moyens (38, 40) de détermination d'une valeur relative à la latence de la parole entre les première et seconde interfaces (12, 14) sur la base des horodateurs attribués des zones de corrélation des première et seconde enveloppes.
